# EUROPEAN PATENT SPECIFICATION

(11) **EP 4 290 476 B1**
(45) Date of publication and mention of the grant of the patent: **25.02.2026**
(21) Application number: 23176969.6
(22) Date of filing: 02.06.2023
(51) Int. Cl.: G06V 20/58

(54) **PARKING SPACE DETECTION METHOD AND DEVICE, VEHICLE, AND STORAGE MEDIUM**
VERFAHREN UND VORRICHTUNG ZUR PARKPLATZERKENNUNG, FAHRZEUG UND SPEICHERMEDIUM
PROCÉDÉ ET DISPOSITIF DE DÉTECTION DE PLACE DE STATIONNEMENT, VÉHICULE ET SUPPORT D'INFORMATIONS

(30) Priority: 07.06.2022 CN 202210639071
(43) Date of publication of application: 13.12.2023
(73) Proprietor: Anhui NIO Autonomous Driving Technology Co., Ltd., Hefei, Anhui 230601 (CN)
(72) Inventor: PAN, Yong, Jiading Shanghai (CN)
(74) Representative: Vossius & Partner Patentanwälte Rechtsanwälte mbB

(56) References cited:
- CN-A- 112 389 419
- US-A1- 2021 042 540
- US-A1- 2021 300 341

## Description

### Technical Field

The disclosure relates to the technical field of deep learning, and specifically provides a parking space detection method and device, a vehicle, and a storage medium.

### Background Art

In the design of automatic parking products, a user needs to be informed of available (parkable) parking spaces on an interaction interface, so that the user can make interactive choices. The accuracy of determining the availability of a parking space is required to be high, to minimize a possibility that the user cannot choose a parking space.

In related technologies, an image classification method is usually used to obtain the availability of a parking space. However, during parking space detection, there are some complex scenarios during entrance. For example, the complex scenarios may include the following: A front/rear parking space is blocked. There are many non-standard elements in a parking lot, such as cabbages piled in a parking space, user graffiti, and various charging signs and patterns. There are dynamic or static obstacles of different sizes near the parking space, such as vehicles, pedestrians, cone barrels, and sign boards. In a complex scenario, the availability of a parking space obtained only by using the image classification method is unreliable.

US 2021/300341 A1 discloses a parking assist system that can park a vehicle in an appropriate position in a parking area without an operation input by a driver. US 2021/042540 Al discloses a method for recognizing a parking space for a vehicle by fusing image signals and ultrasonic signals.

### Summary

To overcome the above defects, the disclosure is proposed to provide a parking space detection method and device, a vehicle, and a storage medium, to solve or at least partially solve the technical problem that the availability of a parking space obtained only by using an image classification method is unreliable in a complex scenario.

According to a first aspect, the disclosure provides a parking space detection method, including:
obtaining, from a vehicle-mounted camera, a current frame image of a scenario of a vehicle;
separately inputting the current frame image into a pre-trained parking space detection model, a pre-trained obstacle detection model, and a pre-trained scenario detection model for detection, to separately obtain a parking space prediction result, an obstacle prediction result, and a scenario prediction result;
determining, based on a detected positional relationship between any target parking space and the vehicle-mounted camera, whether the target parking space is a parking space where the vehicle-mounted camera is located;
performing, if it is determined that the target parking space is the parking space where the vehicle-mounted camera is located, verification on a parking space prediction result of the target parking space by using an obstacle prediction result and a scenario prediction result, to obtain a single-frame prediction result of the target parking space; and
performing, if it is determined that the target parking space is a parking space other than the parking space where the vehicle-mounted camera is located, verification on a parking space prediction result of the target parking space by using a scenario prediction result, to obtain a single-frame prediction result of the target parking space.

According to a second aspect, the disclosure provides a parking space detection device, including at least one processor and a storage apparatus configured to store a plurality of program codes, where the program codes are adapted to be loaded and executed by the at least one processor to perform the parking space detection method according to any one of the above implementations.

According to a third aspect, a vehicle is provided, including the above parking space detection device.

According to a fourth aspect, a computer-readable storage medium is provided. The computer-readable storage medium stores a plurality of program codes, where the program codes are adapted to be loaded and executed by at least one processor to perform the parking space detection method according to any one of the above technical solutions.

The above one or more technical solutions of the disclosure have at least one or more of the following beneficial effects:
In implementing the technical solutions of the disclosure, the current frame image that is obtained from the vehicle-mounted camera and that is of the scenario of the vehicle is separately input into the pre-trained parking space detection model, the pre-trained obstacle detection model, and the pre-trained scenario detection model for detection, to separately obtain the parking space prediction result, the obstacle prediction result, and the scenario prediction result. Then, it is determined, based on the detected positional relationship between any target parking space and the vehicle-mounted camera, whether the target parking space is the parking space where the vehicle-mounted camera is located. If it is determined that the target parking space is the parking space where the vehicle-mounted camera is located, verification is performed on the parking space prediction result of the target parking space by using the obstacle prediction result and the scenario prediction result, to obtain the single-frame prediction result of the target parking space. If it is determined that the target parking space is a parking space other than the parking space where the vehicle-mounted camera is located, verification is performed on the parking space prediction result of the target parking space by using the scenario prediction result, to obtain the single-frame prediction result of the target parking space. In this way, after the verification based on a plurality of verification mechanisms, a highly precise parking space detection result can be given in a complex scenario. In addition, a precise prediction result can be given while the vehicle does not need to pass the target parking space completely, which improves a parking space release rate.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a parking space detection method according to an embodiment of the disclosure;
FIG. 2 is a schematic flowchart of main steps of a parking space detection method according to another embodiment of the disclosure;
FIG. 3 is a schematic flowchart of main steps of a parking space detection method according to still another embodiment of the disclosure;
FIG. 4 is a block diagram of a main structure of a parking space detection device according to an embodiment of the disclosure; and
FIG. 5 is a schematic diagram of a current frame image of a scenario of a vehicle.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program codes, or may be a combination of software and hardware. The at least one processor may be a central processing unit, a microprocessor, a graphics processing unit, a digital signal processor, or any other suitable processor. The at least one processor has a data and/or signal processing function. The at least one processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

In automatic parking technologies, an image classification method is usually used to obtain the availability of a parking space. However, during parking space detection, there are some complex scenarios during entrance. For example, the complex scenarios may include the following: A front/rear parking space is blocked. There are many non-standard elements in a parking lot, such as cabbages piled in a parking space, user graffiti, and various charging signs and patterns. There are dynamic or static obstacles of different sizes near the parking space, such as vehicles, pedestrians, cone barrels, and sign boards. In a complex scenario, the availability of a parking space obtained only by using the image classification method is unreliable.

Therefore, to solve the above technical problems, the disclosure provides the following technical solutions.

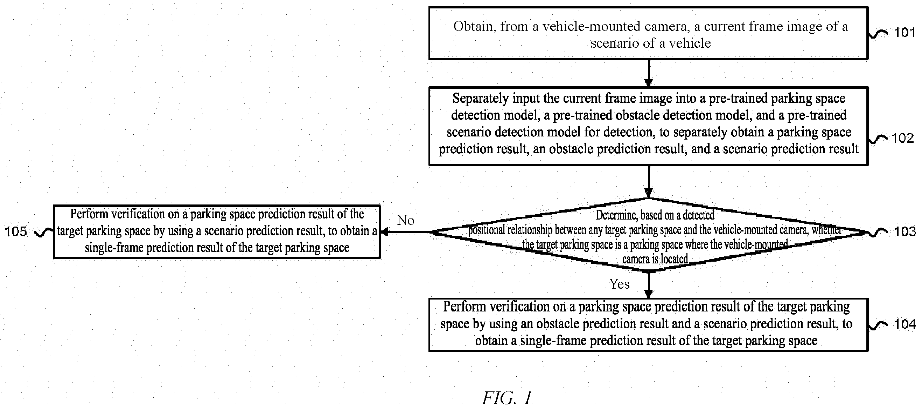

FIG. 1 is a schematic flowchart of main steps of a parking space detection method according to an embodiment of the disclosure. As shown in FIG. 1, the parking space detection method in this embodiment of the disclosure mainly includes steps 101 to step 105 below.

In step 101, a current frame image of a scenario of a vehicle is obtained from a vehicle-mounted camera.

In a specific implementation process, the vehicle-mounted camera is installed in the vehicle, and the vehicle-mounted camera captures the current frame image of the scenario of the vehicle. Exemplarily, the vehicle-mounted camera may be a fisheye camera or any other form of camera, and the vehicle-mounted camera may be installed in corresponding areas of the front, the rear, and both sides of the vehicle body of the vehicle, so that the vehicle-mounted camera can obtain the current frame image of the scenario of the vehicle.

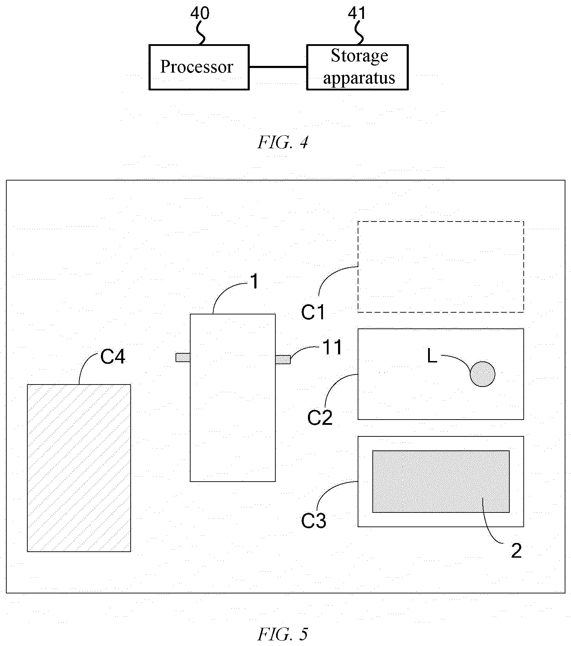

In a specific implementation process, for example, the vehicle-mounted camera is installed on a vehicle ear 11 (a vehicle rearview mirror). A traveling vehicle 1 travels along a road, there are parking spaces on both sides of the road, and scenario images are continuously captured along the road and then are spliced to obtain an aerial view of the scenario of the vehicle, to serve as the current frame image. FIG. 5 is a schematic diagram of a current frame image of a scenario of a vehicle. FIG. 5 only shows a partial image of the scenario of the vehicle. The current frame image of the scenario of the vehicle may include the traveling vehicle 1, a first parking space C1, a second parking space C2, a third parking space C3, a fourth parking space C4, a parking lock L, and a parked vehicle 2. In step 102, the current frame image is separately input into a pre-trained parking space detection model, a pre-trained obstacle detection model, and a pre-trained scenario detection model for detection, to separately obtain a parking space prediction result, an obstacle prediction result, and a scenario prediction result.

In a specific implementation process, different detection models for predicting the availability of parking spaces are pre-trained, so as to perform a plurality of verifications on the availability of parking spaces by using prediction results of a plurality of detection models.

Specifically, the parking space detection model, the obstacle detection model, and the scenario detection model are pre-trained, and after the current frame image of the scenario of the vehicle is obtained, the image is separately input into the pre-trained parking space detection model, the pre-trained obstacle detection model, and the pre-trained scenario detection model for detection, to obtain the parking space prediction result, the obstacle prediction result, and the scenario prediction result.

The parking space prediction result is an initial result obtained based on image classification, the obstacle prediction result is whether there are obstacles such as a started parking lock and a cone barrel in the parking space, and the scenario prediction result is the drivable area in the scenario of the vehicle, display information of the parking space in the current frame image in the current scenario, and the like.

In step 103, it is determined, based on a detected positional relationship between any target parking space and the vehicle-mounted camera, whether the target parking space is a parking space where the vehicle-mounted camera is located. If yes, step 104 is performed, and if no, step 105 is performed.

In a specific implementation process, there may be one or more parking spaces in the current frame image, and for any target parking space, the following operation may be performed:
determining, based on a detected positional relationship between any target parking space and the vehicle-mounted camera, whether the target parking space is a parking space where the vehicle-mounted camera is located.

Specifically, center coordinates of the target parking space and coordinates of the vehicle-mounted camera in the current frame image may be obtained, and then it may be determined, based on a geometric relationship between the center coordinates of the target parking space and the coordinates of the vehicle-mounted camera, whether the target parking space is the parking space where the vehicle-mounted camera is located. Exemplarily, if a deviation angle between the target parking space and the vehicle-mounted camera falls within a preset range, it may be determined that the target parking space is a parking space where the vehicle-mounted camera is located; otherwise, it may be determined that the target parking space is a parking space other than the parking space where the vehicle-mounted camera is located.

It should be noted that the above method of determining, based on the geometric relationship between the center coordinates of the target parking space and the coordinates of the vehicle-mounted camera, whether the target parking space is the parking space where the vehicle-mounted camera is located is only an exemplary method, and other methods are not limited in this embodiment. For example, if the coordinates of the vehicle-mounted camera are located between two corner coordinates of a parking space parallel to the driving road, it may also be determined that the target parking space is the parking space where the vehicle-mounted camera is located; otherwise, it may be determined that the target parking space is a parking space other than the parking space where the vehicle-mounted camera is located.

In a specific implementation process, as shown in FIG. 5, the vehicle-mounted camera is aligned with the second parking space C2 at the current moment in a lateral direction perpendicular to the road. In this case, the second parking space C2 in the current frame image is referred to as the parking space where the vehicle-mounted camera is located. On the contrary, in this case, the vehicle-mounted camera is not aligned with the first parking space C1 and the third parking space C3 in the lateral direction, and the vehicle-mounted camera is not aligned with the fourth parking space C4 in the vertical direction parallel to the road. The first parking space C1, the third parking space C3, and the fourth parking space C4 are all referred to as parking spaces other than the parking space where the vehicle-mounted camera is located. In step 104, verification is performed on a parking space prediction result of the target parking space by using an obstacle prediction result and a scenario prediction result, to obtain a single-frame prediction result of the target parking space.

In a specific implementation process, if it is determined that the target parking space is the parking space where the vehicle-mounted camera is located, it means that the vehicle has completely passed the target parking space. In this case, the target parking space is no longer blocked, and obstacle information can be clearly obtained. In this case, verification may be performed on the parking space prediction result of the target parking space by using the obstacle prediction result and the scenario prediction result, to obtain a single-frame prediction result of the target parking space.

Exemplarily, verification may be performed on the parking space prediction result of the target parking space for the first time by using the obstacle prediction result, to obtain the intermediate prediction result of the target parking space, and then verification may be performed on the intermediate prediction result of the target parking space for the second time by using the scenario prediction result, to obtain the single-frame prediction result of the target parking space. Alternatively, verification may be performed on the parking space prediction result of the target parking space for the first time by using the scenario prediction result, to obtain the intermediate prediction result of the target parking space, and then verification may be performed on the intermediate prediction result of the target parking space for the second time by using the obstacle prediction result, to obtain the single-frame prediction result of the target parking space.

In step 105, verification is performed on the parking space prediction result of the target parking space by using the scenario prediction result, to obtain a single-frame prediction result of the target parking space.

In a specific implementation process, if it is determined that the target parking space is a parking space other than the parking space where the vehicle-mounted camera is located, it means that the target parking space may be blocked. In this way, the obstacle information of the target parking space cannot be clearly obtained. Therefore, verification may be performed on the parking space prediction result of the target parking space only by using the scenario prediction result, to obtain the single-frame prediction result of the target parking space.

In a specific implementation process, in this embodiment, the availability of the parking space other than the parking space where the vehicle-mounted camera is located may be predicted. In this way, a precise prediction result can be obtained while the vehicle does not need to completely pass the target parking space, which improves a parking space release rate.

As shown in FIG. 5, based on the above parking space detection method, single-frame prediction results of all parking spaces in the current frame image may be obtained as follows: The first parking space C1 corresponding to a dashed-line box represents a parking space in an available state, the second parking space C2 and the third parking space C3 corresponding to solid line boxes represent parking spaces in the unavailable state, and the fourth parking space C4 with oblique lines represents a parking space in the unknown state.

It should be noted that, to distinguish parking spaces in different states, other methods may also be used, such as using different colors for distinction, which is not specifically limited in this embodiment.

In the parking space detection method of this embodiment, the current frame image that is obtained from the vehicle-mounted camera and that is of the scenario of the vehicle is separately input into the pre-trained parking space detection model, the pre-trained obstacle detection model, and the pre-trained scenario detection model for detection, to separately obtain the parking space prediction result, the obstacle prediction result, and the scenario prediction result. Then, it is determined, based on the detected positional relationship between any target parking space and the vehicle-mounted camera, whether the target parking space is the parking space where the vehicle-mounted camera is located. If it is determined that the target parking space is the parking space where the vehicle-mounted camera is located, verification is performed on the parking space prediction result of the target parking space by using the obstacle prediction result and the scenario prediction result, to obtain the single-frame prediction result of the target parking space. If it is determined that the target parking space is a parking space other than the parking space where the vehicle-mounted camera is located, verification is performed on the parking space prediction result of the target parking space by using the scenario prediction result, to obtain the single-frame prediction result of the target parking space. In this way, after the verification based on a plurality of verification mechanisms, a highly precise parking space detection result can be given in a complex scenario. In addition, a precise prediction result can be given while the vehicle does not need to pass the target parking space completely, which improves a parking space release rate.

In a specific implementation process, the scenario prediction result may include a drivable area in the scenario of the vehicle.

Step 104 above may specifically include the following steps:
(1) Verification is performed on the parking space prediction result of the target parking space by using the obstacle prediction result, to obtain an intermediate prediction result of the target parking space.

In a specific implementation process, the parking space prediction result of the target parking space may include an available state or an unavailable state. If it is determined that the target parking space is the parking space where the vehicle-mounted camera is located, verification may be first performed on the parking space prediction result of the target parking space by using the obstacle prediction result, to obtain the intermediate prediction result of the target parking space. The intermediate prediction result of the target parking space also includes an available state or an unavailable state.

Specifically, if the obstacle prediction result indicates that there is an obstacle in the target parking space, regardless of the state of the parking space prediction result of the target parking space, the state may be verified as an unavailable state to serve as the intermediate prediction result of the target parking space. If the obstacle prediction result indicates that there is no obstacle in the target parking space, the parking space prediction result of the target parking space is maintained as the intermediate prediction result of the target parking space.

(2) If there is a non-road-edge point of the drivable area in the target parking space, and the intermediate prediction result of the target parking space is an available state, the available state is verified as an unknown state to serve as the single-frame prediction result of the target parking space.

In a specific implementation process, points on the boundary corresponding to the drivable area may be used as road edge points, and points inside the boundary may be used as non-road-edge points. Then, it is detected whether there are non-road-edge points (hereinafter referred to as fs points) of the drivable area in the target parking space, to obtain a detection result, and verification is performed on the parking space prediction result of the target parking space based on the obtained detection result and the intermediate prediction result of the target parking space, so as to obtain the single-frame prediction result of the target parking space.

Specifically, if there is an fs point in the target parking space, it means that there may be an object in the target parking space. In this case, if the intermediate prediction result of the target parking space is an available state, the available state may be verified as an unknown state to serve as the single-frame prediction result of the target parking space.

(3) If there is no fs point in the target parking space, and the intermediate prediction result of the target parking space is an available state, the available state is maintained as the single-frame prediction result of the target parking space.

In a specific implementation process, if there is no fs point in the target parking space, it means that there is no object in the target parking space. In this case, if the intermediate prediction result of the target parking space is an available state, the available state is maintained as the single-frame prediction result of the target parking space.

(4) If there is an fs point in the target parking space, and the intermediate prediction result of the target parking space is an unavailable state, the unavailable state is maintained as the single-frame prediction result of the target parking space.

In a specific implementation process, if there is an fs point in the target parking space, it means that there may be an object in the target parking space. In this case, if the intermediate prediction result of the target parking space is an unavailable state, the unavailable state is maintained as the single-frame prediction result of the target parking space.

(5) If there is no fs point in the target parking space, and the intermediate prediction result of the target parking space is an unavailable state, the unavailable state is verified as an available state to serve as the single-frame prediction result of the target parking space.

In a specific implementation process, if there is no fs point in the target parking space, it means that there may be an object in the target parking space. In this case, if the intermediate prediction result of the target parking space is an unavailable state, the unavailable state is verified as an available state to serve as the single-frame prediction result of the target parking space.

Step 105 above may specifically include the following steps:
(11) If there is an fs point in the target parking space, and the parking space prediction result of the target parking space is an available state, the available state is verified as an unknown state to serve as the single-frame prediction result of the target parking space.
(12) If there is no fs point in the target parking space, and the parking space prediction result of the target parking space is an available state, the available state is maintained as the single-frame prediction result of the target parking space.
(13) If there is an fs point in the target parking space, and the parking space prediction result of the target parking space is an unavailable state, the unavailable state is verified as an unknown state to serve as the single-frame prediction result of the target parking space.
(14) If there is no fs point in the target parking space, and the parking space prediction result of the target parking space is an unavailable state, the unavailable state is verified as an available state to serve as the single-frame prediction result of the target parking space.

In a specific implementation process, the scenario prediction result may include display information of the parking space in the current frame image in the scenario of the vehicle. The display information includes displaying the entire target parking space or displaying a part of the target parking space.

Step 104 above may specifically include the following steps:
(21) Verification is performed on the parking space prediction result of the target parking space by using the obstacle prediction result, to obtain an intermediate prediction result of the target parking space. The intermediate prediction result of the target parking space includes an available state or an unavailable state.
(22) If the display information is displaying a part of the target parking space, and the intermediate prediction result of the target parking space is an available state, the available state is verified as an unknown state to serve as the single-frame prediction result of the target parking space.
(23) If the display information is displaying the entire target parking space, and the intermediate prediction result of the target parking space is an available state, the available state is maintained as the single-frame prediction result of the target parking space.
(24) If the display information is displaying a part of the target parking space, and the intermediate prediction result of the target parking space is an unavailable state, the unavailable state is maintained as the single-frame prediction result of the target parking space.
(25) If the display information is displaying the entire target parking space, and the intermediate prediction result of the target parking space is an unavailable state, the unavailable state is verified as an available state to serve as the single-frame prediction result of the target parking space.

This implementation process is similar to the verification process using the drivable area. For details, reference may be made to the above relevant records. Details are not repeated herein.

Step 105 above may specifically include the following steps:
(31) If the display information is displaying a part of the target parking space, and the parking space prediction result of the target parking space is an available state, the available state is verified as an unknown state to serve as the single-frame prediction result of the target parking space.
(32) If the display information is displaying the entire target parking space, and the parking space prediction result of the target parking space is an available state, the available state is maintained as the single-frame prediction result of the target parking space.
(33) If the display information is displaying a part of the target parking space, and the parking space prediction result of the target parking space is an unavailable state, the unavailable state is verified as the unknown state to serve as the single-frame prediction result of the target parking space.
(34) If the display information is displaying the entire target parking space, and the parking space prediction result of the target parking space is an unavailable state, the unavailable state is verified as an available state to serve as the single-frame prediction result of the target parking space.

In a specific implementation process, the single-frame prediction result of the target parking space may be shown in Table 1. Table 1 is a verification table of the target parking space and the fs point or the display information of the parking space in the current frame image. The display information of the parking space in the current frame image is represented by the parking space being inside the image or the parking space being outside the image. Exemplarily, the vehicle-mounted camera is installed in a rearview mirror of the vehicle. A parking space where the vehicle-mounted camera is located may be referred to as a vehicle-ear parking space, and a parking space other than a parking space where the vehicle-mounted camera is located may be referred to as a non-vehicle-ear parking space.

**Table 1**

| | Vehicle-ear parking space | | Non-vehicle-ear parking space | |
|---|---|---|---|---|
| | Available state | Unavailable state | Available state | Unavailable state |
| There is the fs point or the parking space is outside the image | Unknown state | Unavailable state | Unknown state | Unknown state |
| There is no fs point or the parking space is inside the image | Available state | Available state | Available state | Available state |

In a specific implementation process, when the vehicle is driven, a plurality of frame images are captured at different times, and single-frame prediction results of the target parking space in frames of images may be different. Therefore, to more precisely determine the availability of the target parking space in the current frame image, the disclosure further provides the following technical solutions.

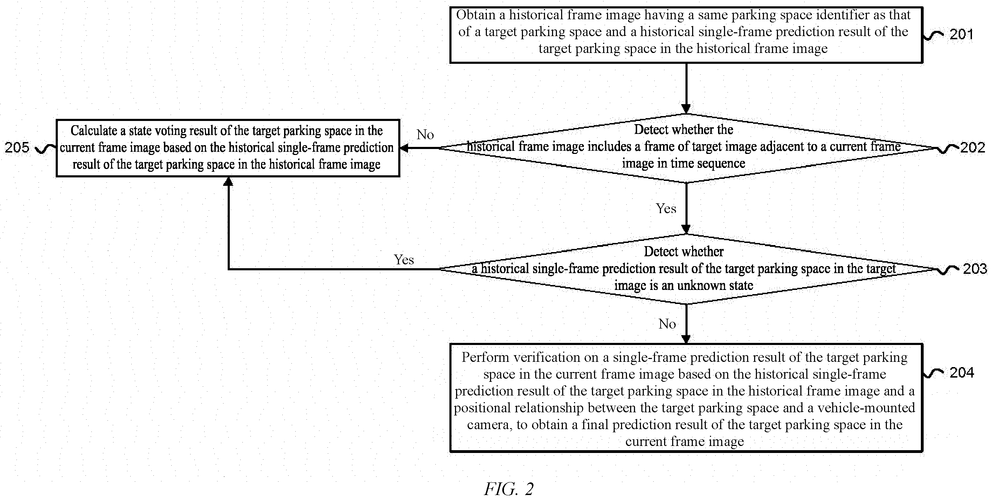

FIG. 2 is a schematic flowchart of main steps of a parking space detection method according to another embodiment of the disclosure. In the parking space detection method of this embodiment, after the single-frame prediction result of the target parking space is obtained by using the parking space detection method of the above embodiment, the single-frame prediction result of the target parking space may be further corrected based on a single-frame prediction result of a historical target parking space of the target parking space. As shown in FIG. 2, the parking space detection method in this embodiment of the disclosure mainly includes steps 201 to step 205 below.

In step 201, a historical frame image having a same parking space identifier as that of the target parking space and a historical single-frame prediction result of the target parking space in the historical frame image are obtained.

In a specific implementation process, after the single-frame prediction result of the target parking space is obtained, the historical frame image having a same parking space identifier as that of the target parking space and the historical single-frame prediction result of the target parking space in the historical frame image may be obtained based on the identifier of the target parking space.

In step 202, it is detected whether the historical frame image includes a frame of target image adjacent to the current frame image in time sequence. If yes, step 203 is performed, and if no, step 205 is performed.

In a specific implementation process, each frame of image has a corresponding time sequence, and it may be detected whether the historical frame image includes a frame of target image adjacent to the current frame image in time sequence. Specifically, if the time sequence of the current frame image is t, a time sequence of a frame of target image adjacent to the time sequence of the current frame image is t-1. If the historical frame image includes an image with a time sequence t-1, it may be determined that there is a frame of target image adjacent to the current frame image in time sequence, and step 203 is performed. If the historical frame image includes no image with a time sequence t-1, it may be determined that there is no frame of target image adjacent to the current frame image in time sequence, and step 205 is performed.

In step 203, it is detected whether a historical single-frame prediction result of the target parking space in the target image is an unknown state. If yes, step 205 is performed, and if no, step 204 is performed.

In a specific implementation process, if the historical frame image includes a frame of target image adjacent to the current frame image in time sequence, it may be detected whether a historical single-frame prediction result of the target parking space in the target image is an unknown state. If yes, step 204 is performed, and if no, step 205 is performed.

In step 204, verification is performed on the single-frame prediction result of the target parking space in the current frame image based on the historical single-frame prediction result of the target parking space in the historical frame image and the positional relationship between the target parking space and the vehicle-mounted camera, to obtain a final prediction result of the target parking space in the current frame image.

In a specific implementation process, if the historical single-frame prediction result of the target parking space in the target image is not an unknown state, verification may be performed on the single-frame prediction result of the target parking space in the current frame image based on the historical single-frame prediction result of the target parking space in the historical frame image and the positional relationship between the target parking space and the vehicle-mounted camera, to obtain a final prediction result of the target parking space in the current frame image.

Specifically, if it is determined, based on the positional relationship between the target parking space and the vehicle-mounted camera, that the target parking space is the parking space where the vehicle-mounted camera is located, and the historical single-frame prediction result of the parking space in the historical frame image includes at least N unavailable states with specified reasons, the unavailable states with specified reasons are used as the final prediction result of the target parking space in the current frame image. If it is determined, based on the positional relationship between the target parking space and the vehicle-mounted camera, that the target parking space is the parking space where the vehicle-mounted camera is located, and/or the single-frame prediction result of the parking space in the historical frame image does not include at least N unavailable states with specified reasons, the historical single-frame prediction result of the target parking space in the target image is used as the final prediction result of the target parking space in the current frame image. N may be 3. The unavailable state with a specified reason may be but is not limited to: being unavailable because a parking lock is started.

In step 205, a state voting result of the target parking space in the current frame image is calculated based on the historical single-frame prediction result of the target parking space in the historical frame image.

In a specific implementation process, if the historical frame image includes a frame of target image adjacent to the current frame image in time sequence, but the historical single-frame prediction result of the target parking space in the target image is not an unknown state, the state voting result of the target parking space in the current frame image may be calculated based on the historical single-frame prediction result of the target parking space in the historical frame image. Alternatively, if the historical frame image includes no frame of target image adjacent to the current frame image in time sequence, the state voting result of the target parking space in the current frame image may be calculated based on the historical single-frame prediction result of the target parking space in the historical frame image.

In a specific implementation process, in calculating the state voting result of the target parking space in the current frame image, a state that has the largest number among states in the historical single-frame prediction result of the target parking space in the historical frame image may be selected as the state voting result of the target parking space in the current frame image. For example, the unavailable state with a specified reason has the largest number among states in the historical single-frame prediction result of the target parking space in the historical frame image, and the state voting result of the target parking space in the current frame image is the unavailable state with a specified reason.

In step 206, verification is performed on the state voting result based on the historical single-frame prediction result of the target parking space in the historical frame image and the positional relationship between the target parking space and the vehicle-mounted camera, to obtain the final prediction result of the target parking space in the current frame image.

In a specific implementation process, after the state voting result of the target parking space in the current frame image is calculated, verification may be further performed on the state voting result based on the historical single-frame prediction result of the target parking space in the historical frame image and the positional relationship between the target parking space and the vehicle-mounted camera, to obtain the final prediction result of the target parking space in the current frame image.

Specifically, if it is determined, based on the positional relationship between the target parking space and the vehicle-mounted camera, that the target parking space is the parking space where the vehicle-mounted camera is located, when a second preset condition is met, an available state is used as the final prediction result of the target parking space in the current frame image. When the second preset condition is not met and a third preset condition is not met, an unknown state is used as the final prediction result of the target parking space in the current frame image. When the second preset condition is not met, but the third preset condition and a fourth preset condition are met, an unavailable state with a specified reason is used as the final prediction result of the target parking space in the current frame image. When the second preset condition and the fourth preset condition are not met, but the third preset condition is met, an unavailable state with a non-specified reason is used as the final prediction result of the target parking space in the current frame image. The unavailable state with a non-specified reason is calculated by voting.

The second preset condition includes that the historical single-frame prediction result of the target parking space in the historical frame image includes at least M available states, and does not include at least P unavailable states with specified reasons; and M may be 3, and P may be 1.

The third preset condition includes that the historical single-frame prediction result of the target parking space in the historical frame image includes at least P unavailable states with specified reasons or includes at least Q unavailable states with non-specified reasons; and Q may be 3.

The fourth preset condition includes that the historical single-frame prediction result of the target parking space in the historical frame image includes at least P unavailable states with specified reasons.

In a specific implementation process, if it is determined, based on the positional relationship between the target parking space and the vehicle-mounted camera, that the target parking space is a parking space other than the parking space where the vehicle-mounted camera is located, it is detected whether the historical single-frame prediction result of the target parking space in the historical frame image includes at least M available states.

If the historical single-frame prediction result of the target parking space in the historical frame image includes at least M available states, an available state is used as the final prediction result of the target parking space in the current frame image.

If the historical single-frame prediction result of the parking space in the historical frame image does not include the at least M available states, an unknown state is used as the final prediction result of the target parking space in the current frame image.

In the parking space detection method of this embodiment, after the single-frame prediction result of the target parking space in the current frame image is obtained, verification may be further performed on the single-frame prediction result of the target parking space based on the single-frame prediction result of the target parking space in the historical frame image, to obtain the final prediction result of the target parking space in the current frame image. In this way, the obtained final prediction result of the target parking space in the current frame image is more precise and reliable.

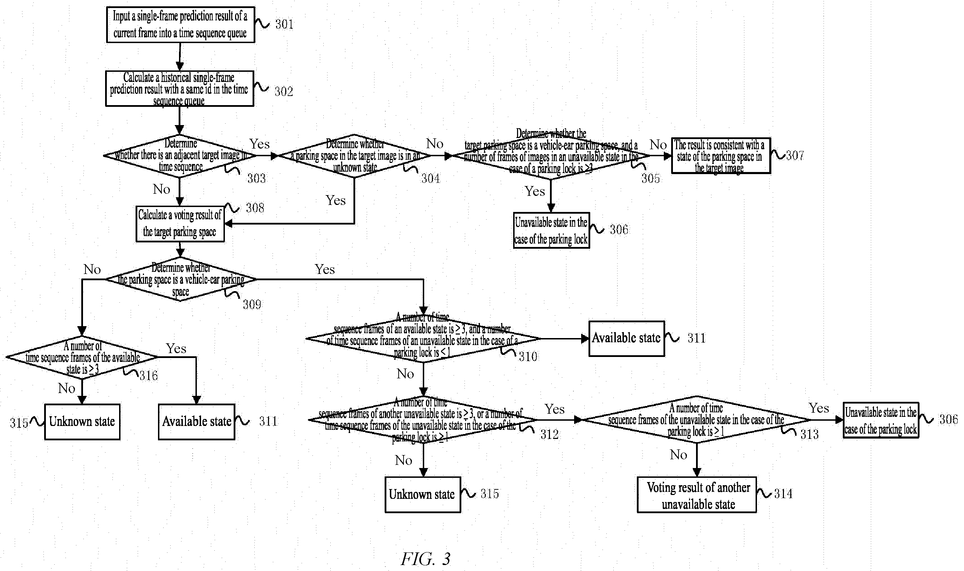

In a specific implementation process, for a process of performing verification on the single-frame prediction result of the target parking space in the current frame image by using the historical single-frame prediction result of the target parking space in the historical frame image, reference may be made to an example in FIG. 3. FIG. 3 is a schematic flowchart of main steps of a parking space detection method according to still another embodiment of the disclosure.

As shown in FIG. 3, the parking space detection method of this embodiment may specifically include step 301 to step 316.

In step 301, a single-frame prediction result of a current frame is input into a time sequence queue.

The single-frame prediction result of the current frame may be understood as the single-frame prediction result of the target parking space in the current frame image.

In step 302, a historical single-frame prediction result with a same id in the time sequence queue is calculated.

This step is equivalent to: the process of obtaining a historical frame image having a same parking space identifier as that of the target parking space and a historical single-frame prediction result of the target parking space in the historical frame image.

In step 303, it is determined whether there is an adjacent target image in time sequence. If yes, step 308 is performed, and if no, step 304 is performed.

This step is equivalent to: detecting whether the historical frame image includes a frame of target image adjacent to the current frame image in time sequence.

In step 304, it is determined whether the parking space in the target image is in an unknown state. If yes, step 308 is performed, and if no, step 305 is performed.

This step is equivalent to: detecting whether a historical single-frame prediction result of the target parking space in the target image is an unknown state.

In step 305, it is determined whether the target parking space is a vehicle-ear parking space, and a number of frames of images in an unavailable state in the case of the parking lock is ≥3. If yes, step 306 is performed, and if no, step 307 is performed.

This step is equivalent to: if it is determined, based on the positional relationship between the target parking space and the vehicle-mounted camera, that the target parking space is the parking space where the vehicle-mounted camera is located, and the historical single-frame prediction result of the parking space in the historical frame image includes at least N unavailable states with specified reasons.

In step 306, it is the unavailable state in the case of the parking lock.

This step is equivalent to: if it is determined, based on the positional relationship between the target parking space and the vehicle-mounted camera, that the target parking space is the parking space where the vehicle-mounted camera is located, and the historical single-frame prediction result of the parking space in the historical frame image includes at least N unavailable states with specified reasons, using the unavailable states with specified reasons as the final prediction result of the target parking space in the current frame image.

In step 307, the result is consistent with a state of the parking space in the target image.

This step is equivalent to: if it is determined, based on the positional relationship between the target parking space and the vehicle-mounted camera, that the target parking space is the parking space where the vehicle-mounted camera is located, and/or the single-frame prediction result of the parking space in the historical frame image does not include at least N unavailable states with specified reasons, using the historical single-frame prediction result of the target parking space in the target image as the final prediction result of the target parking space in the current frame image.

In step 308, a voting result of the target parking space is calculated.

This step is equivalent to: calculating a state voting result of the target parking space in the current frame image based on the historical single-frame prediction result of the target parking space in the historical frame image.

In step 309, it is determined whether the parking space is a vehicle-ear parking space. If yes, step 310 is performed, and if no, step 317 is performed.

In step 310, a number of time sequence frames of the available state is ≥ 3, and a number of time sequence frames of the unavailable state in the case of the parking lock is ≤ 1. If yes, step 311 is performed, and if no, step 312 is performed.

This step is equivalent to the second preset condition.

In step 311, it is the available state.

This step is equivalent to: using an available state as the final prediction result of the target parking space in the current frame image.

In step 312, a number of time sequence frames of another unavailable state is ≥ 3, or a number of time sequence frames of the unavailable state in the case of the parking lock is ≥ 1. If yes, step 313 is performed, and if no, step 316 is performed.

This step is equivalent to the third preset condition.

In step 313, a number of time sequence frames of the unavailable state in the case of the parking lock is ≥ 1. If yes, step 306 is performed, and if no, step 314 is performed.

This step is equivalent to the fourth preset condition.

In step 314, a voting result of another unavailable state is used.

This step is equivalent to: using an unavailable state with a non-specified reason as the final prediction result of the target parking space in the current frame image.

In step 315, it is the unknown state.

This step is equivalent to: using the unknown state as the final prediction result of the target parking space in the current frame image.

In step 316, a number of time sequence frames of the available state is ≥ 3. If yes, step 311 is performed, and if no, step 315 is performed.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure as defined only by the claims.

Those skilled in the art can understand that all parking space boxes or some flows in the above method in an embodiment of the disclosure may also be implemented by a computer program instructing relevant hardware. The computer program may be stored in a computer-readable storage medium, and when the computer program is executed by at least one processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program codes, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Furthermore, the disclosure further provides a parking space detection device.

FIG. 4 is a block diagram of a main structure of a parking space detection device according to an embodiment of the disclosure. As shown in FIG. 4, the parking space detection device of this embodiment of the disclosure may include a processor 40 and a storage apparatus 41, the storage apparatus 41 is configured to store a plurality of program codes, and the program codes are adapted to be loaded and executed by the processor 40 to perform the parking space detection method according to the above embodiment. For ease of description, only parts related to the embodiments of the disclosure are shown. For specific technical details that are not disclosed, reference may be made to the method part of the embodiments of the disclosure. The parking space detection device may be a control device formed by various electronic devices.

Further, the disclosure further provides a vehicle, which may include the parking space detection device according to the above embodiment. The vehicle may be an autonomous vehicle.

Further, the disclosure further provides a computer-readable storage medium. In an embodiment of the computer-readable storage medium according to the disclosure, the computer-readable storage medium may be configured to store a program for performing the parking space detection method of the above method embodiments, and the program may be loaded and executed by at least one processor to implement the above parking space detection method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, it should be understood that since the configuration of the modules is only intended to illustrate the functional units of the apparatus of the disclosure, physical devices corresponding to these modules may be at least one processor itself, or a part of the parking space box in software, or a part of the parking space box in hardware, or a part of the parking space box in a combination of software and hardware in the at least one processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure as defined only by the claims.

Heretofore, the technical solutions of the disclosure have been described with reference to the preferred implementations shown in the accompanying drawings. However, those skilled in the art can readily understand that the scope of protection of the disclosure is apparently not limited to these specific implementations

## Claims

1. A parking space detection method, comprising:
obtaining (101), from a vehicle-mounted camera, a current frame image of a scenario of a vehicle;
separately inputting (102) the current frame image into a pre-trained parking space detection model, a pre-trained obstacle detection model, and a pre-trained scenario detection model for detection, to separately obtain a parking space prediction result, an obstacle prediction result, and a scenario prediction result;
wherein the parking space prediction result is an initial result obtained based on image classification,
the obstacle prediction result is whether there are obstacles in the parking space, and
the scenario prediction result comprises a drivable area in the scenario of the vehicle and display information of the parking space in the current frame image in the scenario of the vehicle;
determining (103), based on a detected positional relationship between any target parking space and the vehicle-mounted camera in the current frame image, whether the target parking space is a parking space where the vehicle-mounted camera is located;
performing, if it is determined (103) that the target parking space is the parking space where the vehicle-mounted camera is located, verification (104) on a parking space prediction result of the target parking space by using an obstacle prediction result and a scenario prediction result, to obtain a single-frame prediction result of the target parking space in the current frame image; and
performing, if it is determined (103) that the target parking space is a parking space other than the parking space where the vehicle-mounted camera is located, verification (105) on a parking space prediction result of the target parking space by using a scenario prediction result, to obtain a single-frame prediction result of the target parking space in the current frame image.

2. The parking space detection method according to claim 1, wherein
the performing, if it is determined that the target parking space is the parking space where the vehicle-mounted camera is located, verification on a parking space prediction result of the target parking space by using an obstacle prediction result and a scenario prediction result, to obtain a single-frame prediction result of the target parking space in the current frame image comprises:
performing verification on the parking space prediction result of the target parking space by using the obstacle prediction result, to obtain an intermediate prediction result of the target parking space, wherein the intermediate prediction result of the target parking space comprises an available state or an unavailable state;
if there is a non-road-edge point of the drivable area in the target parking space, and the intermediate prediction result of the target parking space is an available state, verifying the available state as an unknown state to serve as the single-frame prediction result of the target parking space in the current frame image;
if there is no non-road-edge point of the drivable area in the target parking space, and the intermediate prediction result of the target parking space is an available state, maintaining the available state as the single-frame prediction result of the target parking space in the current frame image;
if there is a non-road-edge point of the drivable area in the target parking space, and the intermediate prediction result of the target parking space is an unavailable state, maintaining the unavailable state as the single-frame prediction result of the target parking space in the current frame image; and
if there is no non-road-edge point of the drivable area in the target parking space, and the intermediate prediction result of the target parking space is an unavailable state, verifying the unavailable state as an available state to serve as the single-frame prediction result of the target parking space in the current frame image.

3. The parking space detection method according to claim 2, wherein the performing, if it is determined that the target parking space is a parking space other than the parking space where the vehicle-mounted camera is located, verification on a parking space prediction result of the target parking space by using a scenario prediction result, to obtain a single-frame prediction result of the target parking space in the current frame image comprises:
if there is a non-road-edge point of the drivable area in the target parking space, and the parking space prediction result of the target parking space is an available state, verifying the available state as an unknown state to serve as the single-frame prediction result of the target parking space in the current frame image;
if there is no non-road-edge point of the drivable area in the target parking space, and the parking space prediction result of the target parking space is an available state, maintaining the available state as the single-frame prediction result of the target parking space in the current frame image;
if there is a non-road-edge point of the drivable area in the target parking space, and the parking space prediction result of the target parking space is an unavailable state, verifying the unavailable state as an unknown state to serve as the single-frame prediction result of the target parking space in the current frame image; and
if there is no non-road-edge point of the drivable area in the target parking space, and the parking space prediction result of the target parking space is an unavailable state, verifying the unavailable state as an available state to serve as the single-frame prediction result of the target parking space in the current frame image.

4. The parking space detection method according to any of claims 1 to 3, wherein the display information comprises displaying the entire target parking space or displaying a part of the target parking space; and
the performing, if it is determined that the target parking space is the parking space where the vehicle-mounted camera is located, verification on a parking space prediction result of the target parking space by using an obstacle prediction result and a scenario prediction result, to obtain a single-frame prediction result of the target parking space in the current frame image comprises:
performing verification on the parking space prediction result of the target parking space by using the obstacle prediction result, to obtain an intermediate prediction result of the target parking space, wherein the intermediate prediction result of the target parking space comprises an available state or an unavailable state;
if the display information is displaying a part of the target parking space, and the intermediate prediction result of the target parking space is an available state, verifying the available state as an unknown state to serve as the single-frame prediction result of the target parking space in the current frame image;
if the display information is displaying the entire target parking space, and the intermediate prediction result of the target parking space is an available state, maintaining the available state as the single-frame prediction result of the target parking space in the current frame image;
if the display information is displaying a part of the target parking space, and the intermediate prediction result of the target parking space is an unavailable state, maintaining the unavailable state as the single-frame prediction result of the target parking space in the current frame image; and
if the display information is displaying the entire target parking space, and the intermediate prediction result of the target parking space is an unavailable state, verifying the unavailable state as an available state to serve as the single-frame prediction result of the target parking space in the current frame image.

5. The parking space detection method according to claim 4, wherein the performing, if it is determined that the target parking space is the parking space where the vehicle-mounted camera is located, verification on a parking space prediction result of the target parking space by using an obstacle prediction result and a scenario prediction result, to obtain a single-frame prediction result of the target parking space in the current frame image comprises:
if the display information is displaying a part of the target parking space, and the parking space prediction result of the target parking space is an available state, verifying the available state as an unknown state to serve as the single-frame prediction result of the target parking space in the current frame image;
if the display information is displaying the entire target parking space, and the parking space prediction result of the target parking space is an available state, maintaining the available state as the single-frame prediction result of the target parking space in the current frame image;
if the display information is displaying a part of the target parking space, and the parking space prediction result of the target parking space is an unavailable state, verifying the unavailable state as an unknown state to serve as the single-frame prediction result of the target parking space in the current frame image; and
if the display information is displaying the entire target parking space, and the parking space prediction result of the target parking space is an unavailable state, verifying the unavailable state as an available state to serve as the single-frame prediction result of the target parking space in the current frame image.

6. The parking space detection method according to any one of claims 1 to 5, further comprising:
obtaining (201) a historical frame image having a same parking space identifier as that of the target parking space and a historical single-frame prediction result of the target parking space in the historical frame image;
detecting (202) whether the historical frame image comprises a frame of target image adjacent to the current frame image in time sequence;
if the historical frame image comprises a frame of target image adjacent to the current frame image in time sequence, detecting (203) whether a historical single-frame prediction result of the target parking space in the target image is an unknown state; and
if the historical single-frame prediction result of the target parking space in the target image is not an unknown state, performing (204) verification on the single-frame prediction result of the target parking space in the current frame image based on the historical single-frame prediction result of the target parking space in the historical frame image and the positional relationship between the target parking space and the vehicle-mounted camera, to obtain a final prediction result of the target parking space in the current frame image.

7. The parking space detection method according to claim 6, wherein the performing verification on the single-frame prediction result of the target parking space in the current frame image based on the historical single-frame prediction result of the target parking space in the historical frame image and the positional relationship between the target parking space and the vehicle-mounted camera, to obtain a final prediction result of the target parking space in the current frame image comprises:
if it is determined, based on the positional relationship between the target parking space and the vehicle-mounted camera, that the target parking space is the parking space where the vehicle-mounted camera is located, and the historical single-frame prediction result of the parking space in the historical frame image comprises at least N unavailable states with specified reasons, using the unavailable states with specified reasons as the final prediction result of the target parking space in the current frame image; and
if it is determined, based on the positional relationship between the target parking space and the vehicle-mounted camera, that the target parking space is the parking space where the vehicle-mounted camera is located, and/or the single-frame prediction result of the parking space in the historical frame image does not comprise at least N unavailable states with specified reasons, using the historical single-frame prediction result of the target parking space in the target image as the final prediction result of the target parking space in the current frame image.

8. The parking space detection method according to claim 6 or 7, further comprising:
when a first preset condition is met, calculating (205) a state voting result of the target parking space in the current frame image based on the historical single-frame prediction result of the target parking space in the historical frame image; and
performing verification on the state voting result based on the historical single-frame prediction result of the target parking space in the historical frame image and the positional relationship between the target parking space and the vehicle-mounted camera, to obtain the final prediction result of the target parking space in the current frame image,
wherein the first preset condition comprises that
the historical frame image comprises a frame of target image adjacent to the current frame image in time sequence, but the historical single-frame prediction result of the target parking space in the target image is not an unknown state; or
the historical frame image not comprising a frame of target image adjacent to the current frame image in time sequence.

9. The parking space detection method according to claim 8, wherein the performing verification on the state voting result based on the historical single-frame prediction result of the target parking space in the historical frame image and the positional relationship between the target parking space and the vehicle-mounted camera, to obtain the final prediction result of the target parking space in the current frame image comprises:
if it is determined, based on the positional relationship between the target parking space and the vehicle-mounted camera, that the target parking space is the parking space where the vehicle-mounted camera is located, when a second preset condition is met, using an available state as the final prediction result of the target parking space in the current frame image; when the second preset condition is not met and a third preset condition is not met, using an unknown state as the final prediction result of the target parking space in the current frame image; when the second preset condition is not met, but the third preset condition and a fourth preset condition are met, using an unavailable state with a specified reason as the final prediction result of the target parking space in the current frame image; and when the second preset condition and the fourth preset condition are not met, but the third preset condition is met, using an unavailable state with a non-specified reason as the final prediction result of the target parking space in the current frame image, wherein the unavailable state with a non-specified reason is calculated by voting;
the second preset condition comprises that the historical single-frame prediction result of the target parking space in the historical frame image comprises at least M available states, and does not comprise at least P unavailable states with specified reasons;
the third preset condition comprises that the historical single-frame prediction result of the target parking space in the historical frame image comprises at least P unavailable states with specified reasons or comprises at least Q unavailable states with non-specified reasons; and
the fourth preset condition comprises that the historical single-frame prediction result of the target parking space in the historical frame image comprises at least P unavailable states with specified reasons.

10. The parking space detection method according to claim 8 or 9, wherein the performing verification on the state voting result based on the historical single-frame prediction result of the target parking space in the historical frame image and the positional relationship between the target parking space and the vehicle-mounted camera, to obtain the final prediction result of the target parking space in the current frame image comprises:
if it is determined, based on the positional relationship between the target parking space and the vehicle-mounted camera, that the target parking space is a parking space other than the parking space where the vehicle-mounted camera is located, detecting whether the historical single-frame prediction result of the target parking space in the historical frame image comprises at least M available states;
if the historical single-frame prediction result of the target parking space in the historical frame image comprises at least M available states, using an available state as the final prediction result of the target parking space in the current frame image; and
if the historical single-frame prediction result of the parking space in the historical frame image does not comprise the at least M available states, using an unknown state as the final prediction result of the target parking space in the current frame image.

11. A parking space detection device, comprising at least one processor and a storage apparatus configured to store a plurality of program codes, wherein the program codes are adapted to be loaded and executed by the at least one processor to perform a parking space detection method according to any one of claims 1 to 10.

12. A vehicle, comprising the parking space detection device according to claim 11.

13. A non-transitory computer-readable storage medium storing a plurality of program codes, wherein the program codes are adapted to be loaded and executed by at least one processor to perform a parking space detection method according to any one of claims 1 to 10.

## Patentansprüche

1. Parkplatzdetektionsverfahren, das Folgendes umfasst:
Erhalten (101), von einer fahrzeugmontierten Kamera, eines aktuellen Rahmenbilds eines Szenarios eines Fahrzeugs;
getrenntes Eingeben (102) des aktuellen Rahmenbilds in ein vorab trainiertes Parkplatzdetektionsmodell, ein vorab trainiertes Hindernisdetektionsmodell, ein vorab trainiertes Szenariodetektionsmodell für Detektion, um getrennt ein Parkplatzvorhersageergebnis, ein Hindernisvorhersageergebnis und ein Szenariovorhersageergebnis zu erhalten;
wobei das Parkplatzvorhersageergebnis ein anfängliches Ergebnis ist, das basierend auf Bildklassifizierung erhalten wurde,
wobei das Hindernisvorhersageergebnis ist, ob Hindernisse im Parkplatz vorhanden sind, und
wobei das Szenariovorhersageergebnis einen fahrbaren Bereich im Szenario des Fahrzeugs und Anzeigeinformationen des Parkplatzes im aktuellen Rahmenbild im Szenario des Fahrzeugs umfasst;
Bestimmen (103), basierend auf einer detektierten positionellen Beziehung zwischen einem beliebigen Zielparkplatz und der fahrzeugmontierten Kamera im aktuellen Rahmenbild, ob der Zielparkplatz ein Parkplatz ist, wo sich die fahrzeugmontierte Kamera befindet;
Durchführen, wenn bestimmt wird (103), dass der Zielparkplatz der Parkplatz ist, wo sich die fahrzeugmontierte Kamera befindet, einer Verifizierung (104) auf einem Parkplatzvorhersageergebnis des Zielparkplatzes unter Verwendung eines Hindernisvorhersageergebnisses und eines Szenariovorhersageergebnisses, um ein Einzelrahmenvorhersageergebnis des Zielparkplatzes im aktuellen Rahmenbild zu erhalten; und
Durchführen, wenn bestimmt wird (103), dass der Zielparkplatz ein anderer Parkplatz ist als der, wo sich die fahrzeugmontierte Kamera befindet, einer Verifizierung (105) auf einem Parkplatzvorhersageergebnis des Zielparkplatzes unter Verwendung eines Szenariovorhersageergebnisses, um ein Einzelrahmenvorhersageergebnis des Zielparkplatzes in dem aktuellen Rahmenbild zu erhalten.

2. Parkplatzdetektionsverfahren nach Anspruch 1, wobei das Durchführen, wenn bestimmt wird, dass der Zielparkplatz der Parkplatz ist, wo sich die fahrzeugmontierte Kamera befindet, einer Verifizierung auf einem Parkplatzvorhersageergebnis des Zielparkplatzes unter Verwendung eines Hindernisvorhersageergebnisses und eines Szenariovorhersageergebnisses, um ein Einzelrahmenvorhersageergebnis des Zielparkplatzes im aktuellen Rahmenbild zu erhalten, Folgendes umfasst:
Durchführen einer Verifizierung auf dem Parkplatzvorhersageergebnis des Zielparkplatzes unter Verwendung des Hindernisvorhersageergebnisses, um ein Zwischenvorhersageergebnis des Zielparkplatzes zu erhalten, wobei das Zwischenvorhersageergebnis des Zielparkplatzes einen verfügbaren Zustand oder einen nicht verfügbaren Zustand umfasst;
wenn es einen Nicht-Straßenrandpunkt des fahrbaren Bereichs in dem Zielparkplatz gibt und das Zwischenvorhersageergebnis des Zielparkplatzes ein verfügbarer Zustand ist, Verifizieren des verfügbaren Zustands als ein unbekannter Zustand, um als das Einzelrahmenvorhersageergebnis des Zielparkplatzes im aktuellen Rahmenbild zu dienen;
wenn es keinen Nicht-Straßenrandpunkt des fahrbaren Bereichs in dem Zielparkplatz gibt und das Zwischenvorhersageergebnis des Zielparkplatzes ein verfügbarer Zustand ist, Aufrechterhalten des verfügbaren Zustands als das Einzelrahmenvorhersageergebnis des Zielparkplatzes im aktuellen Rahmenbild;
wenn es einen Nicht-Straßenrandpunkt des fahrbaren Bereichs im Zielparkplatz gibt und das Zwischenvorhersageergebnis des Zielparkplatzes ein nicht verfügbarer Zustand ist, Aufrechterhalten des nicht verfügbaren Zustands als das Einzelrahmenvorhersageergebnis des Zielparkplatzes in dem aktuellen Rahmenbild;
und wenn es keinen Nicht-Straßenrandpunkt des fahrbaren Bereichs im Zielparkplatz gibt und das Zwischenvorhersageergebnis des Zielparkplatzes ein nicht verfügbarer Zustand ist, Verifizieren des nicht verfügbaren Zustands als ein verfügbarer Zustand, um als das Einzelrahmenvorhersageergebnis des Zielparkplatzes im aktuellen Rahmenbild zu dienen.

3. Parkplatzdetektionsverfahren nach Anspruch 2, wobei das Durchführen, wenn bestimmt wird, dass der Zielparkplatz ein anderer Parkplatz ist als der, wo sich die fahrzeugmontierte Kamera befindet, einer Verifizierung auf einem Parkplatzvorhersageergebnis des Zielparkplatzes unter Verwendung eines Szenariovorhersageergebnisses, um ein Einzelrahmenvorhersageergebnis des Zielparkplatzes in dem aktuellen Rahmenbild zu erhalten, Folgendes umfasst:
wenn es einen Nicht-Straßenrandpunkt des fahrbaren Bereichs in dem Zielparkplatz gibt und das Parkplatzvorhersageergebnis des Zielparkplatzes ein verfügbarer Zustand ist, Verifizieren des verfügbaren Zustands als ein unbekannter Zustand, um als das Einzelrahmenvorhersageergebnis des Zielparkplatzes im aktuellen Rahmenbild zu dienen;
wenn es keinen Nicht-Straßenrandpunkt des fahrbaren Bereichs in dem Zielparkplatz gibt und das Parkplatzvorhersageergebnis des Zielparkplatzes ein verfügbarer Zustand ist, Aufrechterhalten des verfügbaren Zustands als das Einzelrahmenvorhersageergebnis des Zielparkplatzes im aktuellen Rahmenbild;
wenn es einen Nicht-Straßenrandpunkt des fahrbaren Bereichs im Zielparkplatz gibt und das Parkplatzvorhersageergebnis des Zielparkplatzes ein nicht verfügbarer Zustand ist, Verifizieren des nicht verfügbaren Zustands als ein unbekannter Zustand, um als das Einzelrahmenvorhersageergebnis des Zielparkplatzes in dem aktuellen Rahmenbild zu dienen; und wenn es keinen Nicht-Straßenrandpunkt des fahrbaren Bereichs im Zielparkplatz gibt und das Parkplatzvorhersageergebnis des Zielparkplatzes ein nicht verfügbarer Zustand ist, Verifizieren des nicht verfügbaren Zustands als ein verfügbarer Zustand, um als das Einzelrahmenvorhersageergebnis des Zielparkplatzes im aktuellen Rahmenbild zu dienen.

4. Parkplatzdetektionsverfahren nach einem der Ansprüche 1 bis 3, wobei die Anzeigeinformationen Anzeigen des gesamten Zielparkplatzes oder Anzeigen eines Teils des Zielparkplatzes umfassen; und
das Durchführen, wenn bestimmt wird, dass der Zielparkplatz der Parkplatz ist, wo sich die fahrzeugmontierte Kamera befindet, einer Verifizierung auf einem Parkplatzvorhersageergebnis des Zielparkplatzes unter Verwendung eines Hindernisvorhersageergebnisses und eines Szenariovorhersageergebnisses, um ein Einzelrahmenvorhersageergebnis des Zielparkplatzes im aktuellen Rahmenbild zu erhalten, Folgendes umfasst:
Durchführen einer Verifizierung auf dem Parkplatzvorhersageergebnis des Zielparkplatzes unter Verwendung des Hindernisvorhersageergebnisses, um ein Zwischenvorhersageergebnis des Zielparkplatzes zu erhalten, wobei das Zwischenvorhersageergebnis des Zielparkplatzes einen verfügbaren Zustand oder einen nicht verfügbaren Zustand umfasst;
wenn die Anzeigeinformationen einen Teil des Zielparkplatzes anzeigen und das Zwischenvorhersageergebnis des Zielparkplatzes ein verfügbarer Zustand ist, Verifizieren des verfügbaren Zustands als ein unbekannter Zustand, um als das Einzelrahmenvorhersageergebnis des Zielparkplatzes im aktuellen Rahmenbild zu dienen;
wenn die Anzeigeinformationen den gesamten Zielparkplatz anzeigen und das Zwischenvorhersageergebnis des Zielparkplatzes ein verfügbarer Zustand ist, Aufrechterhalten des verfügbaren Zustands als das Einzelrahmenvorhersageergebnis des Zielparkplatzes im aktuellen Rahmenbild;
wenn die Anzeigeinformationen einen Teil des Zielparkplatzes anzeigen und das Zwischenvorhersageergebnis des Zielparkplatzes ein nicht verfügbarer Zustand ist, Aufrechterhalten des nicht verfügbaren Zustands als das Einzelrahmenvorhersageergebnis des Zielparkplatzes im aktuellen Rahmenbild; und
wenn die Anzeigeinformationen den gesamten Zielparkplatz anzeigen und das Zwischenvorhersageergebnis des Zielparkplatzes ein nicht verfügbarer Zustand ist, Verifizieren des nicht verfügbaren Zustands als ein verfügbarer Zustand, um als das Einzelrahmenvorhersageergebnis des Zielparkplatzes im aktuellen Rahmenbild zu dienen.

5. Parkplatzdetektionsverfahren nach Anspruch 4, wobei das Durchführen, wenn bestimmt wird, dass der Zielparkplatz der Parkplatz ist, wo sich die fahrzeugmontierte Kamera befindet, einer Verifizierung auf einem Parkplatzvorhersageergebnis des Zielparkplatzes unter Verwendung eines Hindernisvorhersageergebnisses und eines Szenariovorhersageergebnisses, um ein Einzelrahmenvorhersageergebnis des Zielparkplatzes im aktuellen Rahmenbild zu erhalten, Folgendes umfasst:
wenn die Anzeigeinformationen einen Teil des Zielparkplatzes anzeigen und das Parkplatzvorhersageergebnis des Zielparkplatzes ein verfügbarer Zustand ist, Verifizieren des verfügbaren Zustands als ein unbekannter Zustand, um als das Einzelrahmenvorhersageergebnis des Zielparkplatzes im aktuellen Rahmenbild zu dienen;
wenn die Anzeigeinformationen den gesamten Zielparkplatz anzeigen und das Parkplatzvorhersageergebnis des Zielparkplatzes ein verfügbarer Zustand ist, Aufrechterhalten des verfügbaren Zustands als das Einzelrahmenvorhersageergebnis des Zielparkplatzes im aktuellen Rahmenbild;
wenn die Anzeigeinformationen einen Teil des Zielparkplatzes anzeigen und das Parkplatzvorhersageergebnis des Zielparkplatzes ein nicht verfügbarer Zustand ist, Verifizieren des nicht verfügbaren Zustands als ein unbekannter Zustand, um als das Einzelrahmenvorhersageergebnis des Zielparkplatzes im aktuellen Rahmenbild zu dienen; und
wenn die Anzeigeinformationen den gesamten Zielparkplatz anzeigen und das Parkplatzvorhersageergebnis des Zielparkplatzes ein nicht verfügbarer Zustand ist, Verifizieren des nicht verfügbaren Zustands als ein verfügbarer Zustand, um als das Einzelrahmenvorhersageergebnis des Zielparkplatzes im aktuellen Rahmenbild zu dienen.

6. Parkplatzdetektionsverfahren nach einem der Ansprüche 1 bis 5, das ferner Folgendes umfasst:
Erhalten (201) eines historischen Rahmenbilds mit einer gleichen Parkplatzkennung wie die des Zielparkplatzes und einem historischen Einzelrahmenvorhersageergebnis des Zielparkplatzes im historischen Rahmenbild;
Detektieren (202), ob das historische Rahmenbild einen Rahmen des Zielbildes angrenzend an das aktuelle Rahmenbild in zeitlicher Abfolge umfasst;
wenn das historische Rahmenbild einen Rahmen des Zielbildes angrenzend an das aktuelle Rahmenbild in zeitlicher Abfolge umfasst, Detektieren (203), ob ein historisches Einzelrahmenvorhersageergebnis des Zielparkplatzes im Zielbild ein unbekannter Zustand ist; und
wenn das historische Einzelrahmenvorhersageergebnis des Zielparkplatzes im Zielbild kein unbekannter Zustand ist, Durchführen (204) einer Verifizierung auf dem Einzelrahmenvorhersageergebnis des Zielparkplatzes im aktuellen Rahmenbild basierend auf dem historischen Einzelrahmenvorhersageergebnis des Zielparkplatzes im historischen Rahmenbild und der positionellen Beziehung zwischen dem Zielparkplatz und der fahrzeugmontierten Kamera, um ein abschließendes Vorhersageergebnis des Zielparkplatzes im aktuellen Rahmenbild zu erhalten.

7. Parkplatzdetektionsverfahren nach Anspruch 6, wobei das Durchführen einer Verifizierung auf dem Einzelrahmenvorhersageergebnis des Zielparkplatzes im aktuellen Rahmenbild basierend auf dem historischen Einzelrahmenvorhersageergebnis des Zielparkplatzes im historischen Rahmenbild und der positionellen Beziehung zwischen dem Zielparkplatz und der fahrzeugmontierten Kamera, um ein abschließendes Vorhersageergebnis des Zielparkplatzes im aktuellen Rahmenbild zu erhalten, Folgendes umfasst:
wenn bestimmt wird, basierend auf der positionellen Beziehung zwischen dem Zielparkplatz und der fahrzeugmontierten Kamera, dass der Zielparkplatz der Parkplatz ist, wo sich die fahrzeugmontierte Kamera befindet, und wobei das historische Einzelrahmenvorhersageergebnis des Parkplatzes im historischen Rahmenbild mindestens N nicht verfügbare Zustände mit angegebenen Gründen umfasst, Verwenden der nicht verfügbaren Zustände mit angegebenen Gründen als das abschließende Vorhersageergebnis des Zielparkplatzes im aktuellen Rahmenbild; und
wenn bestimmt wird, basierend auf der positionellen Beziehung zwischen dem Zielparkplatz und der fahrzeugmontierten Kamera, dass der Zielparkplatz der Parkplatz ist, wo sich die fahrzeugmontierte Kamera befindet, und/oder das Einzelrahmenvorhersageergebnis des Parkplatzes im historischen Rahmenbild nicht mindestens N nicht verfügbare Zustände mit angegebenen Gründen umfasst, Verwenden des historischen Einzelrahmenvorhersageergebnisses des Zielparkplatzes im Zielbild als das abschließende Vorhersageergebnis des Zielparkplatzes im aktuellen Rahmenbild.

8. Parkplatzdetektionsverfahren nach Anspruch 6 oder 7, das ferner Folgendes umfasst:
wenn eine erste voreingestellte Bedingung erfüllt ist, Berechnen (205) eines Zustandsabstimmungsergebnisses des Zielparkplatzes im aktuellen Rahmenbild basierend auf dem historischen Einzelrahmenvorhersageergebnis des Zielparkplatzes im historischen Rahmenbild; und
Durchführen einer Verifizierung auf dem Zustandsabstimmungsergebnis basierend auf dem historischen Einzelrahmenvorhersageergebnis des Zielparkplatzes im historischen Rahmenbild und der positionellen Beziehung zwischen dem Zielparkplatz und der fahrzeugmontierten Kamera, um das abschließende Vorhersageergebnis des Zielparkplatzes im aktuellen Rahmenbild zu erhalten,
wobei die erste voreingestellte Bedingung umfasst, dass das historische Rahmenbild einen Rahmen des Zielbildes angrenzend an das aktuelle Rahmenbild in zeitlicher Abfolge umfasst, aber das historische Einzelrahmenvorhersageergebnis des Zielparkplatzes im Zielbild kein unbekannter Zustand ist; oder
das historische Rahmenbild keinen Rahmen des Zielbildes angrenzend an das aktuelle Rahmenbild in zeitlicher Abfolge umfasst.

9. Parkplatzdetektionsverfahren nach Anspruch 8, wobei das Durchführen einer Verifizierung auf dem Zustandsabstimmungsergebnis basierend auf dem historischen Einzelrahmenvorhersageergebnis des Zielparkplatzes im historischen Rahmenbild und der positionellen Beziehung zwischen dem Zielparkplatz und der fahrzeugmontierten Kamera, um das abschließende Vorhersageergebnis des Zielparkplatzes im aktuellen Rahmenbild zu erhalten, Folgendes umfasst:
wenn bestimmt wird, basierend auf der positionellen Beziehung zwischen dem Zielparkplatz und der fahrzeugmontierten Kamera, dass der Zielparkplatz der Parkplatz ist, wo sich die fahrzeugmontierte Kamera befindet, wenn eine zweite voreingestellte Bedingung erfüllt ist, Verwenden eines verfügbaren Zustands als das abschließende Vorhersageergebnis des Zielparkplatzes im aktuellen Rahmenbild; wenn die zweite voreingestellte Bedingung nicht erfüllt ist und eine dritte voreingestellte Bedingung nicht erfüllt ist, Verwenden eines unbekannten Zustands als das abschließende Vorhersageergebnis des Zielparkplatzes im aktuellen Rahmenbild; wenn die zweite voreingestellte Bedingung nicht erfüllt ist, aber die dritte voreingestellte Bedingung und eine vierte voreingestellte Bedingung erfüllt sind, Verwenden eines nicht verfügbaren Zustands mit einem angegebenen Grund als das abschließende Vorhersageergebnis des Zielparkplatzes im aktuellen Rahmenbild; und wenn die zweite voreingestellte Bedingung und die vierte voreingestellte Bedingung nicht erfüllt sind, aber die dritte voreingestellte Bedingung erfüllt ist, Verwenden eines nicht verfügbaren Zustands mit einem nicht angegebenen Grund als das abschließende Vorhersageergebnis des Zielparkplatzes im aktuellen Rahmenbild, wobei der nicht verfügbare Zustand mit einem nicht angegebenen Grund durch Abstimmen berechnet wird;
wobei die zweite voreingestellte Bedingung umfasst, dass das historische Einzelrahmenvorhersageergebnis des Zielparkplatzes im historischen Rahmenbild mindestens M verfügbare Zustände umfasst und nicht mindestens P nicht verfügbare Zustände mit angegebenen Gründen umfasst;
wobei die dritte voreingestellte Bedingung umfasst, dass das historische Einzelrahmenvorhersageergebnis des Zielparkplatzes im historischen Rahmenbild mindestens P nicht verfügbare Zustände mit angegebenen Gründen umfasst oder mindestens Q nicht verfügbare Zustände mit nicht angegebenen Gründen umfasst; und
wobei die vierte voreingestellte Bedingung umfasst, dass das historische Einzelrahmenvorhersageergebnis des Zielparkplatzes im historischen Rahmenbild mindestens P nicht verfügbare Zustände mit angegebenen Gründen umfasst.

10. Parkplatzdetektionsverfahren nach Anspruch 8 oder 9, wobei das Durchführen einer Verifizierung auf dem Zustandsabstimmungsergebnis basierend auf dem historischen Einzelrahmenvorhersageergebnis des Zielparkplatzes im historischen Rahmenbild und der positionellen Beziehung zwischen dem Zielparkplatz und der fahrzeugmontierten Kamera, um das abschließende Vorhersageergebnis des Zielparkplatzes im aktuellen Rahmenbild zu erhalten, Folgendes umfasst:
wenn bestimmt wird, basierend auf der positionellen Beziehung zwischen dem Zielparkplatz und der fahrzeugmontierten Kamera, dass der Zielparkplatz ein anderer Parkplatz als der Parkplatz ist, wo sich die fahrzeugmontierte Kamera befindet, Detektieren, ob das historische Einzelrahmenvorhersageergebnis des Zielparkplatzes im historischen Rahmenbild mindestens M verfügbare Zustände umfasst;
wenn das historische Einzelrahmenvorhersageergebnis des Zielparkplatzes im historischen Rahmenbild mindestens M verfügbare Zustände umfasst, Verwenden eines verfügbaren Zustands als das abschließende Vorhersageergebnis des Zielparkplatzes im aktuellen Rahmenbild; und
wenn das historische Einzelrahmenvorhersageergebnis des Parkplatzes im historischen Rahmenbild nicht die mindestens M verfügbaren Zustände umfasst, Verwenden eines unbekannten Zustands als das abschließende Vorhersageergebnis des Zielparkplatzes im aktuellen Rahmenbild.

11. Parkplatzdetektionsvorrichtung, umfassend zumindest einen Prozessor und eine Speichereinrichtung, ausgelegt zum Speichern von mehreren Programmcodes, wobei die Programmcodes dazu angepasst sind, durch den zumindest einen Prozessor geladen und ausgeführt zu werden, um ein Parkplatzdetektionsverfahren nach einem der Ansprüche 1 bis 10 durchzuführen.

12. Fahrzeug, umfassend die Parkplatzdetektionsvorrichtung nach Anspruch 11.

13. Nicht-flüchtiges computerlesbares Speichermedium, das mehrere Programmcodes speichert, wobei die Programmcodes dazu angepasst sind, durch zumindest einen Prozessor geladen und ausgeführt zu werden, um ein Parkplatzdetektionsverfahren nach einem der Ansprüche 1 bis 10 durchzuführen.

## Revendications

1. Procédé de détection de place de stationnement, comprenant :
l'obtention (101), en provenance d'une caméra montée sur véhicule, d'une image de vue actuelle d'un scénario d'un véhicule ;
l'entrée séparée (102) de l'image de vue actuelle dans un modèle de détection d'espace de station pré-entraîné, un modèle de détection d'obstacle pré-entraîné, et un modèle de détection de scénario pré-entraîné pour la détection, pour obtenir séparément un résultat de prédiction d'espace de stationnement, un résultat de prédiction d'obstacle, et un résultat de prédiction de scénario ;
dans lequel le résultat de prédiction d'espace de stationnement est un résultat initial obtenu sur la base d'une classification d'image,
le résultat de prédiction d'obstacle est composé du fait qu'il y a des obstacles, ou qu'il n'y a pas d'obstacle, dans l'espace de stationnement, et
le résultat de prédiction de scénario comprend une zone, où il est possible de conduire, dans le scénario du véhicule, et des informations d'affichage de l'espace de stationnement dans l'image de vue actuelle dans le scénario du véhicule ;
la détermination (103), sur la base d'une relation positionnelle détectée entre un quelconque espace de stationnement cible et la caméra montée sur véhicule dans l'image de vue actuelle, du fait que l'espace de stationnement cible est, ou n'est pas, un espace de stationnement où la caméra montée sur véhicule est positionnée ;
la réalisation, s'il est déterminé (103) que l'espace de stationnement cible est l'espace de stationnement où la caméra montée sur véhicule est positionnée, d'une vérification (104) sur un résultat de prédiction d'espace de stationnement de l'espace de stationnement cible en utilisant un résultat de prédiction d'obstacle et un résultat de prédiction de scénario, pour obtenir un résultat de prédiction à vue unique de l'espace de stationnement cible dans l'image de vue actuelle ; et
la réalisation, s'il est déterminé (103) que l'espace de stationnement cible est un espace de stationnement autre que l'espace de stationnement où la caméra montée sur véhicule est positionnée, d'une vérification (105) sur un résultat de prédiction d'espace de stationnement de l'espace de stationnement cible en utilisant un résultat de prédiction de scénario, pour obtenir un résultat de prédiction à vue unique de l'espace de stationnement cible dans l'image de vue actuelle.

2. Procédé de détection de place de stationnement selon la revendication 1, dans lequel
la réalisation, s'il est déterminé que l'espace de stationnement cible est l'espace de stationnement où la caméra montée sur véhicule est positionnée, d'une vérification sur un résultat de prédiction d'espace de stationnement de l'espace de stationnement cible en utilisant un résultat de prédiction d'obstacle et un résultat de prédiction de scénario, pour obtenir un résultat de prédiction à vue unique de l'espace de stationnement cible dans l'image de vue actuelle, comprend :
la réalisation d'une vérification sur le résultat de prédiction d'espace de stationnement de l'espace de stationnement cible en utilisant le résultat de prédiction d'obstacle, pour obtenir un résultat de prédiction intermédiaire de l'espace de stationnement cible, dans lequel le résultat de prédiction intermédiaire de l'espace de stationnement cible comprend un état disponible ou un état indisponible ;
s'il y a un point de non-bord de route de la zone où il est possible de conduire dans l'espace de stationnement cible, et le résultat de prédiction intermédiaire de l'espace de stationnement cible est un état disponible, la vérification de l'état disponible en tant qu'état inconnu pour servir de résultat de prédiction à vue unique de l'espace de stationnement cible dans l'image de vue actuelle ;
s'il n'y a aucun point de non-bord de route de la zone où il est possible de conduire dans l'espace de stationnement cible, et le résultat de prédiction intermédiaire de l'espace de stationnement cible est un état disponible, le maintien de l'état disponible en tant que résultat de prédiction à vue unique de l'espace de stationnement cible dans l'image de vue actuelle ;
s'il y a un point de non-bord de route de la zone où il est possible de conduire dans l'espace de stationnement cible, et le résultat de prédiction intermédiaire de l'espace de stationnement cible est un état indisponible, le maintien de l'état indisponible en tant que résultat de prédiction à vue unique de l'espace de stationnement cible dans l'image de vue actuelle ; et
s'il n'y a aucun point de non-bord de route de la zone où il est possible de conduire dans l'espace de stationnement cible, et le résultat de prédiction intermédiaire de l'espace de stationnement cible est un état indisponible, la vérification de l'état indisponible en tant qu'état disponible pour servir de résultat de prédiction à vue unique de l'espace de stationnement cible dans l'image de vue actuelle.

3. Procédé de détection de place de stationnement selon la revendication 2, dans lequel la réalisation, s'il est déterminé que l'espace de stationnement cible est un espace de stationnement autre que l'espace de stationnement où la caméra montée sur véhicule est positionnée, d'une vérification sur un résultat de prédiction d'espace de stationnement de l'espace de stationnement cible en utilisant un résultat de prédiction de scénario, pour obtenir un résultat de prédiction à vue unique de l'espace de stationnement cible dans l'image de vue actuelle, comprend :
s'il y a un point de non-bord de route de la zone où il est possible de conduire dans l'espace de stationnement cible, et le résultat de prédiction d'espace de stationnement de l'espace de stationnement cible est un état disponible, la vérification de l'état disponible en tant qu'état inconnu pour servir de résultat de prédiction à vue unique de l'espace de stationnement cible dans l'image de vue actuelle ;
s'il n'y a aucun point de non-bord de route de la zone où il est possible de conduire dans l'espace de stationnement cible, et le résultat de prédiction d'espace de stationnement de l'espace de stationnement cible est un état disponible, le maintien de l'état disponible en tant que résultat de prédiction à vue unique de l'espace de stationnement cible dans l'image de vue actuelle ;
s'il y a un point de non-bord de route de la zone où il est possible de conduire dans l'espace de stationnement cible, et le résultat de prédiction d'espace de stationnement de l'espace de stationnement cible est un état indisponible, la vérification de l'état indisponible en tant qu'état inconnu pour servir de résultat de prédiction à vue unique de l'espace de stationnement cible dans l'image de vue actuelle ; et
s'il n'y a aucun point de non-bord de route de la zone où il est possible de conduire dans l'espace de stationnement cible, et le résultat de prédiction d'espace de stationnement de l'espace de stationnement cible est un état indisponible, la vérification de l'état indisponible en tant qu'état disponible pour servir de résultat de prédiction à vue unique de l'espace de stationnement cible dans l'image de vue actuelle.

4. Procédé de détection de place de stationnement selon de quelconques des revendications 1 à 3, dans lequel les informations d'affichage comprennent l'affichage de l'espace de stationnement cible entier ou l'affichage d'une partie de l'espace de stationnement cible ; et
la réalisation, s'il est déterminé que l'espace de stationnement cible est l'espace de stationnement où la caméra montée sur véhicule est positionnée, d'une vérification sur un résultat de prédiction d'espace de stationnement de l'espace de stationnement cible en utilisant un résultat de prédiction d'obstacle et un résultat de prédiction de scénario, pour obtenir un résultat de prédiction à vue unique de l'espace de stationnement cible dans l'image de vue actuelle comprend :
la réalisation d'une vérification sur le résultat de prédiction d'espace de stationnement de l'espace de stationnement cible en utilisant le résultat de prédiction d'obstacle, pour obtenir un résultat de prédiction intermédiaire de l'espace de stationnement cible, dans lequel le résultat de prédiction intermédiaire de l'espace de stationnement cible comprend un état disponible ou un état indisponible ;
si les informations d'affichage sont composées de l'affichage d'une partie de l'espace de stationnement cible, et le résultat de prédiction intermédiaire de l'espace de stationnement cible est un état disponible, la vérification de l'état disponible en tant qu'état inconnu pour servir de résultat de prédiction à vue unique de l'espace de stationnement cible dans l'image de vue actuelle ;
si les informations d'affichage sont composées de l'affichage de l'espace de stationnement cible entier, et le résultat de prédiction intermédiaire de l'espace de stationnement cible est un état disponible, le maintien de l'état disponible en tant que résultat de prédiction à vue unique de l'espace de stationnement cible dans l'image de vue actuelle ;
si les informations d'affichage sont composées de l'affichage d'une partie de l'espace de stationnement cible, et le résultat de prédiction intermédiaire de l'espace de stationnement cible est un état indisponible, le maintien de l'état indisponible en tant que résultat de prédiction à vue unique de l'espace de stationnement cible dans l'image de vue actuelle ; et
si les informations d'affichage sont composées de l'affichage de l'espace de stationnement cible entier, et le résultat de prédiction intermédiaire de l'espace de stationnement cible est un état indisponible, la vérification de l'état indisponible en tant qu'état disponible pour servir de résultat de prédiction à vue unique de l'espace de stationnement cible dans l'image de vue actuelle.

5. Procédé de détection de place de stationnement selon la revendication 4, dans lequel la réalisation, s'il est déterminé que l'espace de stationnement cible est l'espace de stationnement où la caméra montée sur véhicule est positionnée, d'une vérification sur un résultat de prédiction d'espace de stationnement de l'espace de stationnement cible en utilisant un résultat de prédiction d'obstacle et un résultat de prédiction de scénario, pour obtenir un résultat de prédiction à vue unique de l'espace de stationnement cible dans l'image de vue actuelle, comprend :
si les informations d'affichage sont composées de l'affichage d'une partie de l'espace de stationnement cible, et le résultat de prédiction d'espace de stationnement de l'espace de stationnement cible est un état disponible, la vérification de l'état disponible en tant qu'état inconnu pour servir de résultat de prédiction à vue unique de l'espace de stationnement cible dans l'image de vue actuelle ;
si les informations d'affichage sont composées de l'affichage de l'espace de stationnement cible entier, et le résultat de prédiction d'espace de stationnement de l'espace de stationnement cible est un état disponible, le maintien de l'état disponible en tant que résultat de prédiction à vue unique de l'espace de stationnement cible dans l'image de vue actuelle ;
si les informations d'affichage sont composées de l'affichage d'une partie de l'espace de stationnement cible, et le résultat de prédiction d'espace de stationnement de l'espace de stationnement cible est un état indisponible, la vérification de l'état indisponible en tant qu'état inconnu pour servir de résultat de prédiction à vue unique de l'espace de stationnement cible dans l'image de vue actuelle ; et
si les informations d'affichage sont composées de l'affichage de l'espace de stationnement cible entier, et le résultat de prédiction d'espace de stationnement de l'espace de stationnement cible est un état indisponible, la vérification de l'état indisponible en tant qu'état disponible pour servir de résultat de prédiction à vue unique de l'espace de stationnement cible dans l'image de vue actuelle.

6. Procédé de détection de place de stationnement selon l'une quelconque des revendications 1 à 5, comprenant en outre :
l'obtention (201) d'une image de vue historique ayant un même identifiant d'espace de stationnement que celui de l'espace de stationnement cible, et d'un résultat de prédiction à vue unique historique de l'espace de stationnement cible dans l'image de vue historique ;
la détection (202) du fait que l'image de vue historique comprend, ou ne comprend pas, une vue d'image cible adjacente à l'image de vue actuelle en séquence temporelle ;
si l'image de vue historique comprend une vue d'image cible adjacente à l'image de vue actuelle en séquence temporelle, la détection (203) du fait qu'un résultat de prédiction à vue unique historique de l'espace de stationnement cible dans l'image cible est, ou n'est pas, un état inconnu ; et
si le résultat de prédiction à vue unique historique de l'espace de stationnement cible dans l'image cible n'est pas un état inconnu, la réalisation (204) d'une vérification sur le résultat de prédiction à vue unique de l'espace de stationnement cible dans l'image de vue actuelle sur la base du résultat de prédiction à vue unique historique de l'espace de stationnement cible dans l'image de vue historique et de la relation positionnelle entre l'espace de stationnement cible et la caméra montée sur véhicule, pour obtenir un résultat de prédiction final de l'espace de stationnement cible dans l'image de vue actuelle.

7. Procédé de détection de place de stationnement selon la revendication 6, dans lequel la réalisation d'une vérification sur le résultat de prédiction à vue unique de l'espace de stationnement cible dans l'image de vue actuelle sur la base du résultat de prédiction à vue unique historique de l'espace de stationnement cible dans l'image de vue historique et de la relation positionnelle entre l'espace de stationnement cible et la caméra montée sur véhicule, pour obtenir un résultat de prédiction final de l'espace de stationnement cible dans l'image de vue actuelle, comprend :
s'il est déterminé, sur la base de la relation positionnelle entre l'espace de stationnement cible et la caméra montée sur véhicule, que l'espace de stationnement cible est l'espace de stationnement où la caméra montée sur véhicule est positionnée, et le résultat de prédiction à vue unique historique de l'espace de stationnement dans l'image de vue historique comprend au moins N états indisponibles avec des raisons spécifiées, l'utilisation des états indisponibles avec des raisons spécifiées en tant que résultat de prédiction final de l'espace de stationnement cible dans l'image de vue actuelle ; et
s'il est déterminé, sur la base de la relation positionnelle entre l'espace de stationnement cible et la caméra montée sur véhicule, que l'espace de stationnement cible est l'espace de stationnement où la caméra montée sur véhicule est positionnée, et/ou le résultat de prédiction à vue unique de l'espace de stationnement dans l'image de vue historique ne comprend pas au moins N états indisponibles avec des raisons spécifiées, l'utilisation du résultat de prédiction à vue unique historique de l'espace de stationnement cible dans l'image cible en tant que résultat de prédiction final de l'espace de stationnement cible dans l'image de vue actuelle.

8. Procédé de détection de place de stationnement selon la revendication 6 ou 7, comprenant en outre :
lorsqu'une première condition prédéfinie est respectée, le calcul (205) d'un résultat de vote d'état de l'espace de stationnement cible dans l'image de vue actuelle sur la base du résultat de prédiction à vue unique historique de l'espace de stationnement cible dans l'image de vue historique ; et
la réalisation d'une vérification sur le résultat de vote d'état sur la base du résultat de prédiction à vue unique historique de l'espace de stationnement cible dans l'image de vue historique et de la relation positionnelle entre l'espace de stationnement cible et la caméra montée sur véhicule, pour obtenir le résultat de prédiction final de l'espace de stationnement cible dans l'image de vue actuelle,
dans lequel la première condition prédéfinie comprend le cas où
l'image de vue historique comprend une vue d'image cible adjacente à l'image de vue actuelle en séquence temporelle, mais le résultat de prédiction à vue unique historique de l'espace de stationnement cible dans l'image cible n'est pas un état inconnu ; ou
l'image de vue historique ne comprend pas une vue d'image cible adjacente à l'image de vue actuelle en séquence temporelle.

9. Procédé de détection de place de stationnement selon la revendication 8, dans lequel la réalisation d'une vérification sur le résultat de vote d'état sur la base du résultat de prédiction à vue unique historique de l'espace de stationnement cible dans l'image de vue historique et de la relation positionnelle entre l'espace de stationnement cible et la caméra montée sur véhicule, pour obtenir le résultat de prédiction final de l'espace de stationnement cible dans l'image de vue actuelle, comprend :
s'il est déterminé, sur la base de la relation positionnelle entre l'espace de stationnement cible et la caméra montée sur véhicule, que l'espace de stationnement cible est l'espace de stationnement où la caméra montée sur véhicule est positionnée, lorsqu'une deuxième condition prédéfinie est respectée, l'utilisation d'un état disponible en tant que résultat de prédiction final de l'espace de stationnement cible dans l'image de vue actuelle ; lorsque la deuxième condition prédéfinie n'est pas respectée et une troisième condition prédéfinie n'est pas respectée, l'utilisation d'un état inconnu en tant que résultat de prédiction final de l'espace de stationnement cible dans l'image de vue actuelle ; lorsque la deuxième condition prédéfinie n'est pas respectée, mais la troisième condition prédéfinie et une quatrième condition prédéfinie sont respectées, l'utilisation d'un état indisponible avec une raison spécifiée en tant que résultat de prédiction final de l'espace de stationnement cible dans l'image de vue actuelle ; et, lorsque la deuxième condition prédéfinie et la quatrième condition prédéfinie ne sont pas respectées, mais la troisième condition prédéfinie est respectée, l'utilisation d'un état indisponible avec une raison non spécifiée en tant que résultat de prédiction final de l'espace de stationnement cible dans l'image de vue actuelle, dans lequel l'état indisponible avec une raison non spécifiée est calculé par vote ;
la deuxième condition prédéfinie comprend le cas où le résultat de prédiction à vue unique historique de l'espace de stationnement cible dans l'image de vue historique comprend au moins M états disponibles, et ne comprend pas au moins P états indisponibles avec des raisons spécifiées ;
la troisième condition prédéfinie comprend le cas où le résultat de prédiction à vue unique historique de l'espace de stationnement cible dans l'image de vue historique comprend au moins P états indisponibles avec des raisons spécifiées ou comprend au moins Q états indisponibles avec des raisons non spécifiées ; et
la quatrième condition prédéfinie comprend le cas où le résultat de prédiction à vue unique historique de l'espace de stationnement cible dans l'image de vue historique comprend au moins P états indisponibles avec des raisons spécifiées.

10. Procédé de détection de place de stationnement selon la revendication 8 ou 9, dans lequel la réalisation d'une vérification sur le résultat de vote d'état sur la base du résultat de prédiction à vue unique historique de l'espace de stationnement cible dans l'image de vue historique et de la relation positionnelle entre l'espace de stationnement cible et la caméra montée sur véhicule, pour obtenir le résultat de prédiction final de l'espace de stationnement cible dans l'image de vue actuelle, comprend :
s'il est déterminé, sur la base de la relation positionnelle entre l'espace de stationnement cible et la caméra montée sur véhicule, que l'espace de stationnement cible est un espace de stationnement autre que l'espace de stationnement où la caméra montée sur véhicule est positionnée, la détection du fait que le résultat de prédiction à vue unique historique de l'espace de stationnement cible dans l'image de vue historique comprend, ou ne comprend pas, au moins M états disponibles ;
si le résultat de prédiction à vue unique historique de l'espace de stationnement cible dans l'image de vue historique comprend au moins M états disponibles, l'utilisation d'un état disponible en tant que résultat de prédiction final de l'espace de stationnement cible dans l'image de vue actuelle ; et
si le résultat de prédiction à vue unique historique de l'espace de stationnement dans l'image de vue historique ne comprend pas les au moins M états disponibles, l'utilisation d'un état inconnu en tant que résultat de prédiction final de l'espace de stationnement cible dans l'image de vue actuelle.

11. Dispositif de détection d'espace de stationnement, comprenant au moins un processeur et un appareil de stockage configuré pour stocker une pluralité de codes de programme, dans lequel les codes de programme sont adaptés pour être chargés et exécutés par l'au moins un processeur pour réaliser un procédé de détection de place de stationnement selon l'une quelconque des revendications 1 à 10.

12. Véhicule, comprenant le dispositif de détection d'espace de stationnement selon la revendication 11.

13. Support de stockage non transitoire lisible par ordinateur stockant une pluralité de codes de programme, dans lequel les codes de programme sont adaptés pour être chargés et exécutés par au moins un processeur pour réaliser un procédé de détection de place de stationnement selon l'une quelconque des revendications 1 à 10.
